# EUROPÄISCHE PATENTSCHRIFT

(11) **EP 1 034 639 B1**
(45) Veröffentlichungstag und Bekanntmachung des Hinweises auf die Patenterteilung: **05.09.2001**
(21) Anmeldenummer: 98961064.7
(22) Anmeldetag: 02.11.1998
(51) Int. Cl.: H04L 12/24, H04Q 3/00

(54) **VERFAHREN UND KOMMUNIKATIONSSYSTEM ZUR BEHANDLUNG VON ALARMEN DURCH EIN MEHRERE MANAGEMENTEBENEN AUFWEISENDES MANAGEMENTNETZ**
METHOD AND COMMUNICATION SYSTEM FOR PROCESSING ALARMS IN A MANAGEMENT NETWORK WITH SEVERAL MANAGEMENT LEVELS
PROCEDE ET SYSTEME DE COMMUNICATION POUR TRAITER DES ALARMES PAR UN RESEAU DE GESTION PRESENTANT PLUSIEURS PALIERS DE GESTION

(30) Priorität: 27.11.1997 DE 19752614
(43) Veröffentlichungstag der Anmeldung: 13.09.2000
(73) Patentinhaber: SIEMENS AKTIENGESELLSCHAFT, 80333 München (DE)
(72) Erfinder: HIRSCH, Lucian, D-81373 München (DE); SCHMIDBAUER, Alfred, D-81671 München (DE)
(86) Internationale Anmeldenummer: DE9803195
(87) Internationale Veröffentlichungsnummer: WO9929068

(56) Entgegenhaltungen:
- WO-A-96/20547
- WO-A-96/24899
- PATENT ABSTRACTS OF JAPAN vol. 097, no. 012, 25. Dezember 1997 & JP 09 214510 A (NEC CORP), 15. August 1997
- HAJELA S: "HP OEMF: ALARM MANAGEMENT IN TELECOMMUNICATION NETWORKS" HEWLETT-PACKARD JOURNAL, Bd. 47, Nr. 5, Oktober 1996, Seiten 22-30, XP000631663
- PATENT ABSTRACTS OF JAPAN vol. 096, no. 009, 30. September 1996 & JP 08 123772 A (NEC SOFTWARE LTD), 17. Mai 1996

## Beschreibung

Die Erfindung betrifft ein Verfahren sowie ein entsprechendes Kommunikationssystem zur Behandlung von Alarmen durch ein mehrere Managementebenen aufweisendes Managementnetz, wobei für parallele Alarmdatenabgleiche zwischen einem Agent einer Managementebene und Managern einer nächsthöheren Managementebene die Alarmdaten aktiver Alarme übertragen werden.

Die Prinzipien eines Managementnetzes, die auch als TMN-Prinzipien (Telecommunications Management Network) bezeichnet werden, definieren mehrere Managementebenen für das Management eines Kommunikationssystems - beispielsweise eines Mobil-Kommunikationssystems - , wobei jede Ebene eine doppelte Funktion hat. Im managenden System hat jede Ebene außer der untersten eine Manager-Funktion für die darunterliegende Ebene. Im gemanagten System hat jede Ebene außer der obersten eine Agenten-Funktion für die nächsthöhere Ebene.

Das Fehlermanagement ("Fault Management") ist ein wichtiger Teil des TMN-Managements. Grundsätzlich spielt hier der Agent die aktive Rolle, indem er Fehler der eigenen Managementebene rechtzeitig und genau erkennt und an den Manager der nächsthöheren Ebene als Alarme überträgt. Die Übertragung von Alarmdaten vom Agent zum Manager ist unkritisch, solange der Kommunikationsmechanismus zwischen diesen Systemen nicht gestört ist. Wenn die Verbindung zwischen den beiden Managementebenen, also zwischen Agent und Manager, für eine bestimmte Zeit nicht mehr gewährleistet ist, muß der Agent die während dieses Intervalls aufgetretenen Alarme zwischenspeichern, um sicherzustellen, daß nach dem Wiederherstellen der Kommunikationsmöglichkeit dem Manager zum einen möglichst schnell eine Übersicht der z.Zt. aktiven Alarme - z.B. in Form einer Liste - zur Verfügung gestellt wird, und der Manager zum anderen eine möglichst lückenlose Alarmgeschichte ("alarm history") sowohl der aktiven als auch der beendeten Alarme ("cleared alarms") aufbauen kann.

Zu diesem Zweck wird ein Alarmdatenabgleich (alarm realignment) zwischen Agent und Manager bei jedem neuen Verbindungsaufbau nach einem Verbindungsabbruch oder nach einer Initialisierung des Agenten oder des Managers ausgeführt. Alle Alarmdaten aktiver Alarme, zu denen Fehler im Agent noch nicht behoben sind - erkennbar daran, daß sie nicht als "cleared alarms" gekennzeichnet sind - , sind daher schnellstmöglich und vollständig der nächsthöheren Managementebene zur Verfügung zu stellen.

Aus der internationalen Patentanmeldung WO 96/24899 ist ein Verfahren mit einem oder mehreren Managern sowie einem Agent bekannt, bei dem die Anzahl der vom Agent erzeugten Nachrichten reduziert werden soll.. Abhängig von definierten Parameterwerten werden bestimmte, im Agent generierte Nachrichten von Diskriminatoren ausgefiltert, sodass sie nicht mehr als "Event reports" den Manager erreichen können. Die Verarbeitungslast im Agent wird durch derartige Diskriminatoren nicht reduziert. Daher sieht das Verfahren vor, bereits die Erzeugung der Nachrichten im "managed system" vom Operator am "managing system" kontrollieren zu lassen, d.h. der Agent soll wirklich nur solche Nachrichten generieren, die für den Manager relevant und daher anschließend als "Event reports" über die Manager-Agent-Schnittstelle zu übertragen sind. Das Erzeugen der Nachrichten im Agent erfolgt abhängig von einem "notification stop"- Attribut bei der Definition der einzelnen Objektinstanz, sodass das Aussenden der Nachrichten lastabhängig erlaubt oder verhindert wird.

Aufgabe der Erfindung ist es, ein Verfahren und ein Kommunikationssystem zur Behandlung von Alarmen durch ein mehrere Managementebenen aufweisendes Managementnetz anzugeben, durch das Alarmdatenabgleiche zwischen einem Agent und mehreren Managern optimiert wird.

Diesé Aufgabe wird gemäß der Erfindung hinsichtlich des Verfahrens durch die Merkmale des Patentanspruchs 1 und hinsichtlich des Kommunikationssystems durch die Merkmale des Patentanspruchs 13 gelöst. Weiterbildungen der Erfindung sind den Unteransprüchen zu entnehmen.

Die Erfindung geht davon aus, daß für parallele Alarmdatenabgleich zwischen einem Agent einer Managementebene und Managern einer nächsthöheren Managementebene die Alarmdaten aktiver Alarme übertragen werden. Erfindungsgemäß werden von dem Manager eine oder mehrere Anforderungsnachrichten zum Übermitteln der Alarmdaten an den Agent gesendet, sowie Korrelationsinformationen für eine Zuordnung der jeweiligen Anforderung zu den vom Agent nachfolgend gesendeten Nachrichten mit den Alarmdaten empfangen.

Im Managementnetz können durch die Verwendung der erfindungsgemäßen Korrelationsinformationen mehrere Alarmdatenabgleiche zwischen dem Agent und einem oder mehreren Managern simultan oder seriell ablaufen. Die Folgen einer parallellen Alarmbehandlung sind eine bessere Nutzung der Übertragungsressourcen auf der Schnittstelle der Agent-Manager-Beziehung sowie ein schnelleres Bereitstellen der Alarmdaten aktiver Alarme für die nächsthöhere Managementebene durch den Agent. Durch die Zuordnung anhand der Korrelationsinformationen besteht für den einzelnen Manager beim seriellen wie beim parallelen Ablauf die Möglichkeit, die eintreffenden Antworten des Agenten mit den Alarmdaten - auf mehrere Anforderungen des Managers hin - auch bei Nichteinhalten der Reihenfolge eindeutig den Anforderungen zuordnen zu können - beispielsweise unterschiedlichen Anwendungen im Manager. Nacheinander gesendete Anforderungen können sich gegenseitig überholen, beispielsweise dann, wenn zwischen Agent und Manager ein Paketnetz durchlaufen wird. Der Agent kann mehrere Anforderungen zum Datenabgleich parallel bearbeiten und unmittelbar danach ohne Rücksicht auf die Reihenfolge der gestarteten und an ihn gerichteten Anforderungen die Alarmdaten zum Abgleich an den oder die Manager rücksenden.

Ein besonderer Vorteil der Erfindung besteht darin, daß von mehreren Managern parallel Anforderungen zur Übermittlung von Alarmdaten initiiert und vom Agent abgearbeitet werden können, ohne daß sie sich gegenseitig beeinflussen oder stören. Dies ermöglichen die Korrelationsinformationen auf einfache, aber wirkungsvolle Weise. Ein gegenseitiges Überholen der Nachrichten mit den Alarmen auf dem Kommunikationsweg zwischen Agent und Manager(n) kann zugelassen werden, ohne daß hieraus Verfälschungen oder Fehler entstehen. Darüber hinaus lassen sich durch die Erfindung, gekennzeichnet durch das Mitsenden der Korrelationsinformationen, die auf Anforderung zum Datenabgleich übertragenen Alarme von anderen, auf dem Kommunikationsweg übertragenen Alarmen - den "regulären" Alarmen - unterscheiden.

Dabei hat es sich gemäß einer Weiterbildung der Erfindung als günstig erwiesen, daß von dem Manager in der Anforderungsnachricht eine (erste) Korrelationsinformation für eine Zuordnung der jeweiligen Anforderung zu den vom Agent nachfolgend gesendeten Nachrichten mit den Alarmdaten und von dem Agent jeweils eine Nachricht zum Starten des Alarmdatenabgleichs an den Manager rückgesendet wird, in der die erste Korrelationsinformation für die jeweilige Anforderung und eine weitere Korrelationsinformation für eine Zuordnung der nachfolgend vom Agent gesendeten Nachrichten mit den Alarmdaten zu dem jeweils gestarteten Datenabgleich enthalten ist. Durch die Initiierung und Übertragung der beiden Korrelationsinformationen in getrennten Nachrichten kann die Zuordnung der Anforderungen zu den Nachrichten mit den Alarmdaten durch den Manager erfolgen.

Weiterhin ist es von Vorteil, wenn der Agent die Korrelationsinformation zur Zuordnung der Nachrichten zu dem jeweils gestarteten Datenabgleich jeweils in den Nachrichten mit den Alarmdaten mitsendet. Dadurch ist gewährleistet, daß die Alarmdaten verschiedener, simultan ablaufender Datenabgleiche unabhängig von dem Zeitpunkt ihres Aussendens durch den Agent den Manager erreichen, der jeweils die angeforderten Alarme weiterverarbeitet.

Eine andere Weiterbildung der Erfindung sieht vor, daß von dem Agent nach dem Senden der Nachrichten mit den Alarmdaten jeweils eine Nachricht zum Beenden des Alarmdatenabgleichs an den Manager gesendet wird, in der die Korrelationsinformation für die jeweilige Anforderung enthalten ist. Anhand der eintreffenden Korrelationsinformation können die Manager das Ende der für sie jeweils bestimmten, Alarmdaten enthaltenden Nachrichtensequenz eindeutig erkennen.

Vorteilhaft ist es auch, wenn von dem Agent eine oder mehrere, jeweils von einem zuordenbaren Manager steuerbare Filterfunktionen mit Filterkriterien für die vom Agent erzeugten Nachrichten benutzt werdein, die nur bei Erfüllen der Filterkriterien zum Manager geroutet werden. Die Mitbenutzung des generell für das EVENT REPORTING im Managementnetz vorgesehenen Filtermechanismus hat den Vorteil, daß quasi ohne zusätzlichen Aufwand dieselben Filterkriterien für Realignment-Alarme wie für die anderen Alarme zugrundegelegt werden können. Ansonsten müsste der Manager nämlich diese Filterkriterien erst definieren und in der Anforderung angeben, die der Agent auszuwerten hat, um die gewünschten aktiven Alarme mit den Alarmdaten an den Manager zu senden.

Besonders vorteilhaft hat sich die Erfindung erwiesen, wenn mehrere Anforderungsnachrichten mit jeweils den Anforderungen zuordenbaren Korrelationsinformationen von zumindest zwei Managern gesendet werden. Dabei werden die Manager zum Senden der Anforderungsnachrichten vorzugsweise für den Alarmdatenabgleich von unterschiedlichen Netzeinrichtungen des Managementnetzes gebildet. Nach einer besonders bevorzugten Ausgestaltung bestehen die Manager aus verschiedenen Netzmanagementzentren, wobei eine Korrelationsinformation zur Zuordnung der Anforderung zu dem jeweiligen Netzmanagementzentrum in der Anforderungsnachricht mitgesendet wird.

Alternativ kann die Erfindung aber auch vorteilhaft für den Fall angewendet werden, daß mehrere Anforderungsnachrichten mit jeweils den Anforderungen zuordenbaren Korrelationsinformationen von einem Manager gesendet werden. Gemäß einer bevorzugten Ausgestaltung der Erfindung werden von dem Manager die Anforderungsnachrichten zu unterschiedlichen Anwendungen (Appikationen) in einer physikalischen Netzeinrichtung des Managementnetzes gesendet. Der Manager kann ein Betriebs- und Wartungszentrum oder ein Netzmanagementzentrum mit jeweils verschiedenen Anwendungen sein, und jeweils eine Korrelationsinformation zur Zuordnung der Anforderung zu der jeweiligen Anwendung in der Anforderungsnachricht mitsenden.

Das Kommunikationssystem, in dem für einen Alarmdatenabgleich zwischen einem Agent einer Managementebene und zumindest einem Manager einer nächsthöheren Managementebene die Alarmdaten aktiver Alarme übertragen werden, umfasst laut der Erfindung Einrichtungen in dem Manager für das Senden einer oder mehrerer Anforderungsnachrichten zum Übermitteln der Alarmdaten an den Agent, sowie Einrichtungen in dem Manager zum Empfangen von Korrelationsinformationen für eine Zuordnung der jeweiligen Anforderung zu den vom Agent nachfolgend gesendeten Nachrichten mit den Alarmdaten.

Nachstehend wird die Erfindung anhand eines Ausführungsbeispiels unter Bezugnahme auf die Figuren näher erläutert. Es zeigen
- Figur 1: das Blockschaltbild eines Managementnetzes für ein Mobil-Kommunikationssystem mit Agent-Manager-Beziehung zwischen einem Betriebs- und Wartungszentrum und einem oder mehreren Netzmanagementzentren,
- Figur 2: das Blockschaltbild des Managementnetzes gemäß Figur 1 mit Agent-Manager-Beziehung zwischen einem Basisstationssystem und einem Betriebs- und Wartungszentrum zur Durchführung von zumindest zwei Anwendungen für das Basisstationssystem,
- Figur 3: das Blockschaltbild von Agent und Manager zur Behandlung der Alarme für parallel oder seriell ablaufende Alarmdatenabgleiche,
- Figur 4: den Nachrichtenfluß zwischen dem Agent und dem Manager.

Das Ausführungsbeispiel beschreibt die Erfindung anhand eines TMN-Konzepts für das Management eines Mobil-Kommunikationssystems, das beispielsweise Netzeinrichtungen eines Mobilfunknetzes nach dem GSM-Standard aufweist. Die Erfindung ist aber nicht auf Mobilfunknetze beschränkt, sondern läßt sich auf Telekommunikationsnetze jeder Art, die ein TMN-Managementnetz nutzen, anwenden.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit die nächste Hierarchieebene bildenden Funkstationen, die als Basisstationen bezeichnet werden. Die beispielsweise Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dient. Überwachungsmaßnahmen und Konfigurierungsmaßnahmen werden hierzu meist vom Betriebs- und Wartungszentrum aus ferngesteuert, die üblicherweise im Bereich der Mobilvermittlungsstellen angeordnet sind. Ein Betriebs- und Wartungszentrum kommuniziert dabei jeweils mit einem Basisstationssystem oder Vermittlungssysstem über eine definierte Schnittstelle. Eine weitere Aufgabe des Betriebs- und Wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

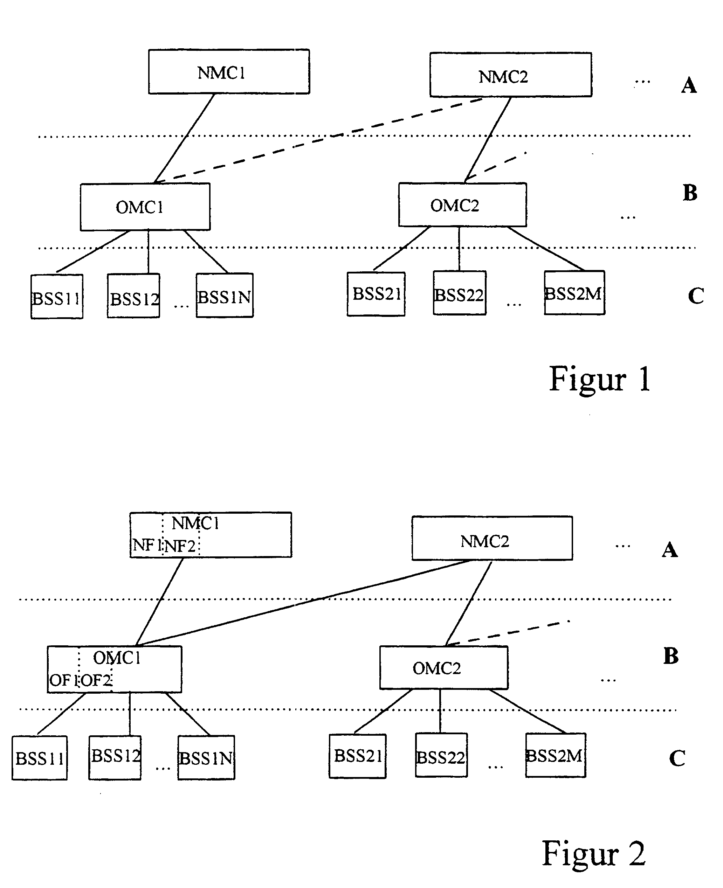

Für das Management des Mobil-Kommunikationssystems definieren die TMN-Prinzipien mehrere Ebenen ("Levels"), von denen im vorliegenden Beispiel drei Ebenen unter Bezugnahme auf die Figuren 1 und 2 nachfolgend erläutert werden.

Die Figuren 1 und 2 zeigen jeweils drei Ebenen A, B und C des Managementnetzes, von denen die Managementebene C die Netzeinrichtungsebene ("Network Element Level") mit mehreren Basisstationssystemen BSS11, BSS12...BSS1N sowie BSS21, BSS22 ...BSS2M enthält. Die Managementebene B kennzeichnet die Netzeinrichtungsmanagementebene ("Network Element Management Level"), in der Betriebs- und Wartungszentren OMC1 und OMC2 jeweils die herstellerspezifische Managementfunktionalität für einzelne Subsysteme, wie im vorliegenden Beispiel das Betriebs- und Wartungszentrum OMC1 für die Basisstationssysteme BSS11, BSS12 ...BSS1N und das Betriebs- und Wartungszentrum OMC2 für die Basisstationssysteme BSS21, BSS22...BSS2M, bereitstellen. Die Managementebene A kennzeichnet die Netzmanagementebene ("Network Management Level"), in der Netzmanagementzentren NMC1 und NMC2 jeweils eine integrierte, vom Hersteller unabhängige Management-Funktionalität realisieren. Dabei können mehrere Netzmanagementzentren einen Zugriff zu derselben Netzeinrichtung der nächstniedrigeren Managementebene B haben, im vorliegenden Beispiel die Netzmanagementzentren NMC1 und NMC2 der nächsthöheren Managementebene C zum Betriebs- und Wartungszentrum OMC1 der nächstniedrigeren Managementebene B. Zwischen den Netzeinrichtungen unterschiedlicher Managementebenen sind definierte Schnittstellen zur Informationsübertragung vorgesehen.

Der Unterschied in den Darstellungen gemäß den Figuren 1 und 2 liegt darin, daß eine Agent-Manager-Beziehung zur Behandlung von Alarmen für einen oder mehrere Alarmdatenabgleiche in Figur 1 zwischen dem Betriebs- und Wartungszentrum OMC1 (Agent) und einem Netzmanagementzentrum NMC1 (Manager) oder mehreren - physikalisch getrennten - Netzmanagementzentren NMC1, NMC2 (Manager) sowie in Figur 2 zwischen dem Basisstationssystem BSS11 (Agent) und zwei verschiedenen Anwendungen OF1 und OF2 (Manager) in dem Betriebs- und Wartungszentrum OMC1 oder zwischen dem Betriebs- und Wartungszentrum OMC1 (Agent) und zwei verschiedenen Anwendungen NF1 und NF2 (Manager) in dem Netzmanagementzentrum NMC1 besteht. Um in den Netzmanagementzentren NMC1, NMC2 jederzeit einen Überblick über die Fehlersituation sicherzustellen, werden vom Betriebs- und Wartungszentrum OMC1 die - auf Grund von beispielsweise innerhalb der betreuten Basisstationssysteme BSS11...BSS1N auftretenden Fehlern - gespeicherten Alarmdaten aktiver Alarme bereitgestellt und parallel zu beiden Managern auf Anforderung gesendet. Dies erfolgt vorzugsweise nach einem Verbindungsabbruch oder nach einer Initialisierung des Agenten oder des Managers. Ebenso können mehrere Anforderungen auch hintereinander von einem einzelnen Manager, z.B. dem Netzmanagementzentrum NMC1 an den Agent, z.B. dem Betriebs- und Wartungszentrum OMC1, gerichtet werden. Figur 1 zeigt die Struktur für gemäß der Erfindung mehrfach ausgesendete Anforderungen zum Alarmdatenabgleich, die im vorliegenden Beispiel parallel zwischen der Managementebene B, in der sich der Agent in Form des Betriebs- und Wartungszentrums OMC1 befindet, und der nächsthöheren Managementebene A, in der die Manager von zumindest zwei Netzmanagementzentren NMC1, NMC2 gebildet werden, ablaufen.

Um auch in der Managementebene B, z.B. in dem Betriebs- und Wartungszentrum OMC1 jederzeit einen Überblick über die Fehlersituation sicherzustellen, werden vom Basisstationssystem BSS11 die - auf Grund von beispielsweise innerhalb der betreuten Basisstationen und Basisstationssteuerungen auftretenden Fehlern - gespeicherten Alarmdaten aktiver Alarme bereitgestellt und parallel zu mindestens zwei Managern des Betriebs- und Wartungszentrums OMC1 in Form der unterschiedlichen Anwendungen OF1 und OF2, die beide von ein- und derselben physikalischen Einrichtung OMC1 ausgeführt werden, gesendet. Dies erfolgt ebenfalls vorzugsweise nach einem Verbindungsabbruch oder nach einer Initialisierung des Agenten oder des Managers. Eine serielle Übertragung von mehrfach durch einen einzelnen Manager, z.B. dem Betriebs- und Wartungszentrum OMC1, initiierten Anforderungen an den Agent, z.B. dem Basisstationssystem BSS11, ist ebenfalls möglich. Alternativ oder zusätzlich kann eine Agent-Manager Beziehung auch zwischen dem Betriebs- und Wartungszentrum OMC1 (ein Agent) und dem Netzmanagementzentrum NMC1 (ein Manager) zum seriellen Austausch von Anforderungen und Alarmdaten oder zum parallelen Austausch von Anforderungen und Alarmdaten für mindestens zwei unterschiedliche Anwendungen NF1 und NF2 (zwei Manager) im Netzmanagementzentrum NMC1 existieren. Figur 2 zeigt die Struktur für gemäß der Erfindung parallel ablaufende Alarmdatenabgleiche zwischen der Managementebene B, in der sich die Manager als Anwendungen OF1 und OF2 befinden, und der nächstniedrigeren Managementebene C, in der sich der Agent befindet.

Sobald eine in der Managementebene C ausgefallene interne Schnittstelle wieder betriebsbereit ist, wird auf Anforderung des Managers/der Manager der Alarmdatenabgleich, auch als Realignment-Prozedur oder Realignment-Verfahren bezeichnet, gestartet. Dabei wird der Alarmdatenabgleich im vorliegenden Beispiel zuerst zwischen dem Basisstationssystem, z.B. BSS11, und den Anwendungen OF1, OF2 im Betriebs- und Wartungszentrum OMC1 parallel begonnen und anschließend zwischen dem Betriebs- und Wartungszentrum OMC1 und den übergeordneten Netzmanagementzentren NMC1, NMC2 parallel fortgeführt. Am Ende dieser Prozeduren ist die Fehlersituation sowohl im OMC als auch in den NMC wieder aktualisiert. Das Realignment-Verfahren kann selbstverständlich auf die Aktualisierung der Alarmdaten zwischen Agent und Managern in zwei unmittelbar angrenzenden Managementebenen, z.B. Ebene B und Ebene A, beschränkt sein.

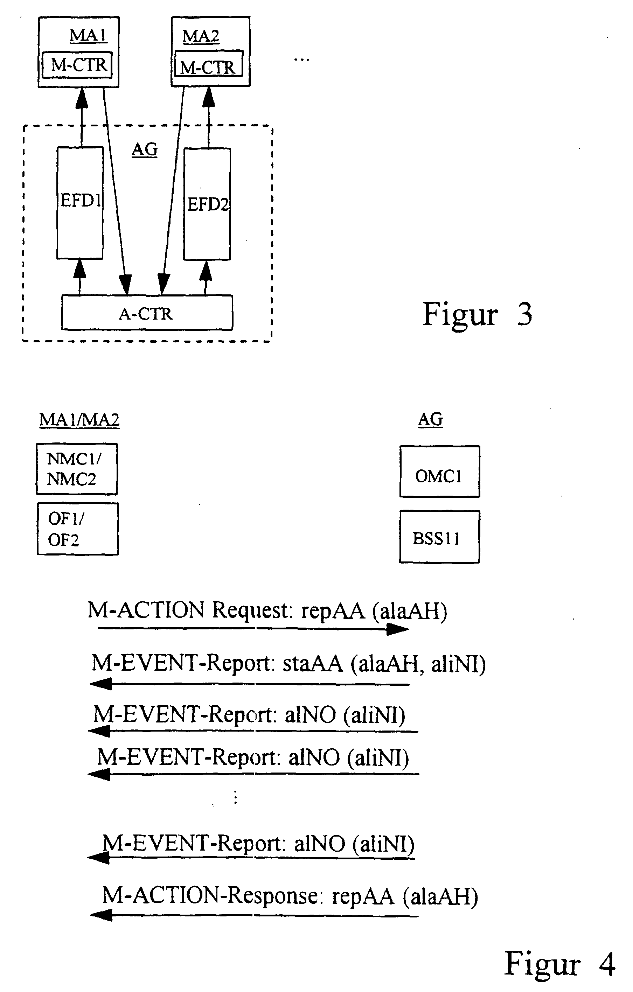

Figur 3 zeigt in schematischer Darstellung den Aufbau von Agent AG und Manager MA1, MA2 mit den zur Durchführung simultan - bei zwei oder mehreren Managern - oder seriell - bei nur einem Manager - ablaufender Realignment-Prozeduren erforderlichen Einrichtungen. Jeder Manager MA1, MA2 und Agent AG verfügt über eine Steuereinrichtung M-CTR bzw. A-CTR, die die Nachrichten für den Alarmdatenabgleich generieren und auswerten können. Ebenso weisen sie - nicht näher dargestellte - Sende/Empfangseinrichtungen für das Versenden und Empfangen der Nachrichten sowie Speichereinrichtungen für das Speichern der Alarmdaten und anderer Nutz- und Signalisierungsinformationen auf. Dabei fügen die Steuereinrichtungen M-CTR der Manager MA1, MA2 in die jeweilige Anforderungsnachricht zur Übermittlung der Alarmdaten durch den Agent eine zur Zuordnung der Anforderung zu nachfolgend gesendeten Nachrichten benutzte Korrelationsinformation ein, die eindeutig ist, und veranlaßt die Übertragung zum Agent. Die Steuereinrichtung A-CTR des Agenten AG empfängt die Nachricht mit der Korrelationsinformation, wertet sie aus, und startet das Realignment zu den Managern, indem jeweils eine Nachricht mit einer weiteren Korrelationsinformation zur Zuordnung der nachfolgend vom Agent gesendeten Nachrichten (alarm notifications) zu dem jeweils gestarteten Realignment in die nächsthöhere Managementebene gesendet wird. Auch die weitere Korrelationsinformation ist eindeutig. Durch die Verwendung der Korrelationsinformationen ist eine eindeutige Zuordnung simultan oder seriell durchgeführter Realignments zu mehreren Managern oder einem einzelnen Manager möglich, was den Alarmdatenabgleich hinsichtlich Ressourcenausnutzung, Zeitdauer und Flexibilität in dem Kommunikationssystem optimiert.

Wahlweise können im Agent AG mehrere, jeweils den Managern MA1, MA2 zuordenbare und von ihnen steuerbare Filterfunktionen EFD1, EFD2 (Event Forwarding Discriminators) mit Filterkriterien für die vom Agent AG erzeugten Nachrichten mitbenutzt werden, sodaß die Nachrichten mit den Alarmdaten nur bei Erfüllen der Filterkriterien zu den Managern MA1, MA2 geroutet werden. Die Steuereinrichtung M-CTR des Managers ist in der Lage, derartige Filterfunktionen im Agent AG einzurichten, zu löschen und die Filterkriterien festzulegen, um je nach seinen individuellen Anforderungen den Nachrichtenfluß steuern zu können. Daher kann der Fall auftreten, daß die Filterfunktions-Einstellung von Manager zu Manager unterschiedlich ist, sodaß durch die simultan ablaufenden Realignment-Prozeduren inhaltlich verschiedene Alarme mit zugehörigen Alarmdaten behandelt werden.

Figur 4 zeigt den Nachrichtenfluß zwischen einem Agent AG - im dargestellten Beispiel gemäß der Figur 1 dem Betriebs- und Wartungszentrum OMC1 oder im dargestellten Beispiel der Figur 2 dem Basisstationssystem BSS11 - und dem Manager MA1, MA2 - im Beispiel gemäß der Figur 1 den unterschiedlichen Netzmanagementzentren NMC1, NMC2 oder im Beispiel der Figur 2 den verschiedenen Applikationen OF1, OF2. Der Nachrichtenfluß erfolgt vorzugsweise unter Verwendung einer standardisierten M-EVENT-REPORT Nachricht, die in eine zu Anfang initiierte M-ACTION-Request Anforderung und in eine zum Ende initiierte M-ACTION-Response Antwort eingebettet ist. Dieses sind generische CMISE-standardisierte (Common Management Information Service Element) Prozeduren, die gemäß ITU-T X.710 definiert sind. Die ITU-T X. 733 definiert den Inhalt einer standardisierten Alarmübertragung (alarm report), die gemäß den M-EVENT-REPORT Services durchgeführt wird. Erfindungsgemäß werden die Korrelationsinformationen in die Nachrichten bzw. in bestimmte Nachrichtenfelder eingetragen. Das Beispiel in Figur 4 zeigt den Nachrichtenfluß nur anhand einzelner Nachrichten, wobei diese parallel zwischen dem Agent AG und den Managern MA1, MA2 oder seriell zwischen dem Agent AG und dem einzelnen Manager MA1 übertragen werden.

Sobald nach einer Unterbrechung der Verbindung die Kommunikation zwischen dem Manager MA1, MA2 und dem Agent AG wiederhergestellt ist, sendet jeder Manager MA1, MA2 die M-ACTION-Request Anforderung mit einer Anforderungsnachricht repAA (report Active Alarms) zum Übermitteln der Alarmdaten. Vorzugsweise wird eine vom Manager MA1, MA2 definierte Korrelationsinformation alaAH (alarm Alignment Handle) - beispielsweise im definierten Nachrichtenfeld "actioninformation"-mitgesendet, die eine direkte Zuordnung der aktuellen M-ACTION-Request Anforderung zu allen nachfolgenden Agent-Nachrichten kennzeichnet. Damit ist bei mehreren Managern die aktuelle Anforderung auch dem jeweiligen Manager zuordenbar, sodaß die parallelen Realignments der Manager voneinander unabhängig initiiert, durchgeführt und beendet werden können. Im Anschluß an die Auswertung der eingetroffenen M-ACTION-Request Anforderung startet der Agent AG den Alarmdatenabgleich durch Erzeugen einer Nachricht staAA (start Alarm Alignment) und Einfügen einer weiteren Korrelationsinformation aliNI (alignment Notification Id) in diese Nachricht. Die vom Agent AG definierte zusätzliche Korrelationsinformation aliNI ermöglicht eine direkte Korrelation nachfolgender Alarme zu dem jeweils gestarteten Alarmdatenabgleich. Dabei ist die Korrelationsinformation alaAH ebenfalls in einem Nachrichtenfeld enthalten. Die Korrelationsinformation aliNI ist beispielsweise in dem standardisierten Nachrichtenfeld "notification Identifier" der Nachricht staAA eingetragen. Beide Informationen alaAH, aliNI werden gemeinsam in der Nachricht staAA vom Agent AG zu den Managern MA1, MA2 ausgesendet. Dadurch können "alignmentbezogene" M-EVENT-REPORT Nachrichten verschiedener M-ACTION-Requests voneinander unterschieden werden, aber auch von regulären M-EVENT-REPORT Nachrichten, die mit dem Datenabgleich nichts zu tun haben. Eine Alignment-Prozedur stoppt nämlich nicht zwingend andere M-EVENT-REPORT Nachrichten, die während der Alignment-Prozedur spontan auftreten und an den oder die Manager gesendet werden.

Über die in der Anforderungsnachricht repAA des M-ACTION-Requests mitgesendete Korrelationsinformation alaAH lassen sich direkt die folgenden Nachrichten staAA sowie repAA korrelieren, da sie ebebnfalls die Korrelationsinformation alaAH enthalten. Die Nachrichten alNO sind über die Korrelationsinformation aliNI mit der Nachricht staAA direkt korreliert. Der Manager kann die Anforderungsnachricht repAA mit den nachfolgenden Nachrichten alNO indirekt über die beiden in der Nachricht staAA enthaltenen Korrelationsinformationen alaAH und aliNI korrelieren.

Im Anschluß an den Start des Alarmdatenabgleichs erfolgt die sukzessive Übertragung der Alarme mit den zugehörigen Alarmdaten in aufeinanderfolgenden Nachrichten alNO (alarm notification) unter Verwendung des M-EVENT-REPORT Service. Dabei weisen die einzelnen Nachrichten alNO jeweils die Korrelationsinformation aliNI - beispielsweise in dem definierten Nachrichtenfeld "correlated Notifications" - auf. Nach der letzten M-EVENT-REPORT Nachricht des Alarmdatenabgleichs generiert der Agent AG die M-ACTION-Response Antwort zur Nachricht repAA (report Active Alarms), die die Korrelationsinformation alaAH zur eindeutigen Kennung der jeweiligen Anforderung des Managers MA1, MA2 enthält. Durch Auswertung dieser Korrelationsinformation kann jeder Manager MA1, MA2, das Ende seiner initiierten M-ACTION-Request Anforderung auf einfache Art und Weise erkennen und die eintreffenden Alarmdaten den Anforderungen zuordnen. Für den Fall, daß zum Zeitpunkt der M-ACTION-Request Anforderung keine aktiven Alarme gespeichert sind, initiiert der Agent die M-ACTION-Response Antwort unmittelbar nach dem Senden der Nachricht staAA. Die Korrelationsinformationen alaAH, aliNI für die eindeutige Zuordnung mehrerer Anforderungen - möglicher simultaner Realignments zu mehreren Managern oder serieller Realignments zu einem einzelnen Manager - werden dennoch von den in der Agent-Manager-Beziehung involvierten Einrichtungen generiert und in den Nachrichten repAA, staAA gesendet. Auch wenn das zu Figur 4 beschriebene Beispiel sich auf parallel Realignments zu mehreren Managern bezieht, kann der Nachrichtenfluß selbstverständlich auf mehrere, von einem einzigen Manager nacheinander ausgelöste Anforderungen angewendet werden, mit dem Vorteil, daß durch die eindeutige Zuordnung anhand der Korrelationsinformationen für den einzelnen Manager die Möglichkeit besteht, die eintreffenden Antworten des Agenten mit den Alarmdaten auch bei Nichteinhalten der Reihenfolge eindeutig den Anforderungen zuordnen zu können - beispielsweise unterschiedlichen Anwendungen im Manager. Nacheinander gesendete Anforderungen können sich gegebenenfalls gegenseitig überholen, beispielsweise dann, wenn zwischen Agent und Manager ein Paketnetz durchlaufen wird.

## Patentansprüche

1. Verfahren zur Behandlung von Alarmen in einem Kommunikationssystem durch ein mehrere Managementebenen (A, B, C) aufweisendes Managementnetz, wobei für parallele Alarmdatenabgleiche zwischen einem Agent (AG) einer Managementebene (B, C) und Managern (MA1, MA2) einer nächsthöheren Managementebene (A, B) die Alarmdaten aktiver Alarme übertragen werden, bei dem
- von dem Manager (MA1, MA2) jeweils eine oder mehrere Anforderungsnachrichten (repAA) zum Übermitteln der Alarmdaten an den Agent (AG) gesendet werden, und
- von dem Manager (MA1, MA2) Korrelationsinformationen (alaAH, aliNI) für eine Zuordnung der jeweiligen Anforderung zu den vom Agent (AG) nachfolgend gesendeten Nachrichten (al-NO) mit den Alarmdaten empfangen werden.

2. Verfahren nach Anspruch 1, bei dem
- von dem Manager (MA1, MA2) in der Anforderungsnachricht (repAA) eine Korrelationsinformation (alaAH) für eine Zuordnung der jeweiligen Anforderung zu den vom Agent (AG) nachfolgend gesendeten Nachrichten (alNO) mit den Alarmdaten gesendet wird,
- von dem Agent (AG) eine Nachricht (staAA) zum Starten des Alarmdatenabgleichs an den Manager (MA1, MA2) gesendet wird, in der die Korrelationsinformation (alaAH) für die jeweilige Anforderung und eine weitere Korrelationsinformation (aliNI) für eine Zuordnung der nachfolgend vom Agent (AG) gesendeten Nachrichten (alNO) mit den Alarmdaten zu dem jeweils gestarteten Datenabgleich enthalten ist.

3. Verfahren nach Anspruch 1 oder 2, bei dem
von dem Agent (AG) jeweils in den Nachrichten (alNO) mit den Alarmdaten die weitere Korrelationsinformation (aliNI) zur Zuordnung der Nachrichten (alNO) zu dem jeweils gestarteten Datenabgleich mitgesendet wird.

4. Verfahren nach einem der vorhergehenden Ansprüche, bei dem von dem Agent (AG) nach dem Senden der Nachrichten (alNO) mit den Alarmdaten jeweils eine Nachricht (resAA) zum Beenden des Alarmdatenabgleichs an den Manager (MA1, MA2) gesendet wird, in der eine Korrelationsinformation (alaAH) für die jeweilige Anforderung enthalten ist.

5. Verfahren nach einem der vorhergehenden Ansprüche, bei dem von dem Agent (AG) eine oder mehrere, jeweils von einem zuordenbaren Manager (MA1, MA2) steuerbare Filterfunktionen (EFD1, EFD2) mit Filterkriterien für die vom Agent (AG) erzeugten Nachrichten benutzt werden, die nur bei Erfüllen der Filterkriterien zum Manager (MA1, MA2) geroutet werden.

6. Verfahren nach einem der vorhergehenden Ansprüche, bei dem mehrere Anforderungsnachrichten (repAA) mit jeweils den Anforderungen zuordenbaren Korrelationsinformationen (alaAH) von zumindest zwei Managern (MA1, MA2) gesendet werden.

7. Verfahren nach Anspruch 6, bei dem
die Manager (MA1, MA2) von unterschiedlichen Netzeinrichtungen (NMC1, NMC2) des Managementnetzes gebildet werden.

8. Verfahren nach Anspruch 6 oder 7, bei dem
die Manager (MA1, MA2) von verschiedenen Netzmanagementzentren (NMC1, NMC2) gebildet werden, und jeweils die Korrelationsinformation (alaAH) zur Zuordnung der Anforderung zu dem jeweiligen Netzmanagementzentrum (NMC1, NMC2) in der Anforderungsnachricht (repAA) gesendet wird.

9. Verfahren nach einem der Ansprüche 1 bis 5, bei dem mehrere Anforderungsnachrichten (repAA) mit jeweils den Anforderungen zuordenbaren Korrelationsinformationen (alaAH) von einem Manager (z.B. MA1) gesendet werden.

10. Verfahren nach Anspruch 9, bei dem
von dem Manager (z.B. MA1) die Anforderungsnachrichten (repAA) für unterschiedliche Anwendungen gesendet werden.

11. Verfahren nach Anspruch 9 oder 10, bei dem
der Manager (z.B. MA1) von einem Betriebs- und Wartungszentrum (OMC1) mit verschiedenen Anwendungen (OF1, OF2) gebildet wird, und jeweils die Korrelationsinformation (alaAH) zur Zuordnung der Anforderung zu der jeweiligen Anwendung (OF1, OF2) in der Anforderungsnachricht (repAA) an ein Basisstationssystem (BSS11) gesendet wird.

12. Verfahren nach Anspruch 9 oder 10, bei dem
der Manager (MA1) von einem Netzmanagementzentrum (NMC1) mit verschiedenen Anwendungen (NF1, NF2) gebildet wird, und jeweils die Korrelationsinformation (alaAH) zur Zuordnung der Anforderung zu der jeweiligen Anwendung (NF1, NF2) in der Anforderungsnachricht (repAA) an ein Betriebs- und Wartungszentrum (OMC1) gesendet wird.

13. Kommunikationssystem zur Behandlung von Alarmen durch ein mehrere Managementebenen (A, B, C) aufweisendes Managementnetz, wobei für parallele Alarmdatenabgleiche zwischen einem Agent (AG) einer Managementebene (z.B. B) und Managern (MA1, MA2) einer nächsthöheren Managementebene (z.B. A) die Alarmdaten aktiver Alarme übertragen werden, mit
- Einrichtungen (M-CTR) in dem Manager (MA1, MA2) für das Senden einer oder mehrerer Anforderungsnachrichten (repAA) zum Übermitteln der Alarmdaten an den Agent (OMC1), und
- Einrichtungen (M-CTR) in dem Manager (MA1, MA2) für das Empfangen von Korrelationsinformationen (alaAH, aliNI) für eine Zuordnung der jeweiligen Anforderung zu den vom Agent (AG) nachfolgend gesendeten Nachrichten (alNO) mit den Alarmdaten.

14. Kommunikationssystem nach Anspruch 13, mit
- Einrichtungen (M-CTR) in dem Manager (MA1, MA2) für das Senden der Anforderungsnachrichten (repAA), in der jeweils eine Korrelationsinformation (alaAH) für eine Zuordnung der jeweiligen Anforderung zu den vom Agent (AG) nachfolgend gesendeten Nachrichten (alNO) mit den Alarmdaten enthalten ist, und
- mit Einrichtungen (A-CTR) in dem Agent (AG) für das Senden einer Nachricht (staAA) zum Starten des Alarmdatenabgleichs an den Manager (MA1, MA2), in der die Korrelationsinformation (alaAH) für die jeweilige Anforderung und eine weitere Korrelationsinformation (aliNI) für eine Zuordnung der nachfolgend vom Agent (AG) gesendeten Nachrichten (alNO) mit den Alarmdaten zu dem jeweils gestarteten Datenabgleich enthalten ist.

15. Kommunikationssystem nach Anspruch 13 oder 14, mit zumindest zwei Managern (MA1, MA2), die zum Senden mehrerer Anforderungsnachrichten (repAA) mit jeweils den Anforderungen zuordenbaren Korrelationsinformationen (alaAH) vorgesehen sind.

16. Kommunikationssystem nach Anspruch 15, mit unterschiedlichen Netzeinrichtungen (NMC1, NMC2) des Managementnetzes, die als Manager (MA1, MA2) zum Senden der Anforderungsnachrichten (repAA) vorgesehen sind.

17. Kommunikationssystem nach Anspruch 15 oder 16, mit verschiedenen Netzmanagementzentren (NMC1, NMC2) als Manager (MA1, MA2) zum Senden der Anforderungsnachrichten (repAA).

18. Kommunikationssystem nach Anspruch 13 oder 14, mit einem Manager (z.B. MA1), der zum Senden mehrerer Anforderungsnachrichten (repAA) mit jeweils den Anforderungen zuordenbaren Korrelationsinformationen (alaAH) vorgesehen ist.

19. Kommunikationssystem nach Anspruch 18, mit
einem Manager (z.B. MA1), der zum Senden von Anforderungsnachrichten (repAA) für unterschiedliche Anwendungen vorgesehen ist.

20. Kommunikationssystem nach Anspruch 18 oder 19, mit
einem Betriebs- und Wartungszentrum (OMC1) als physikalische Netzeinrichtung mit verschiedenen Anwendungen (OF1, OF2), das die Korrelationsinformation (alaAH) zur Zuordnung der Anforderung zu der jeweiligen Anwendung (OF1, OF2) in der Anforderungsnachricht (repAA) an ein Basisstationssystem (BSS11) sendet.

21. Kommunikationssystem nach Anspruch 18 oder 19, mit
einem Netzmanagementzentrum (NMC1) als physikalische Netzeinrichtung mit verschiedenen Anwendungen (NF1, NF2), das die Korrelationsinformation (alaAH) zur Zuordnung der Anforderung zu der jeweiligen Anwendung (NF1, NF2) in der Anforderungsnachricht (repAA) an ein Betriebs- und Wartungszentrum (OMC1) sendet.

## Claims

1. Method of handling alarms in a communication system using a management network which has a plurality of management levels (A, B, C), the alarm data for active alarms being transmitted for parallel alarm realignments between an agent (AG) on one management level (B, C) and managers (MA1, MA2) on a next highest management level (A, B), in which
- the manager (MA1, MA2) sends, in each case, one or more request notifications (repAA) to the agent (AG) for transmission of the alarm data, and
- the manager (MA1, MA2) receives correlation information (alaAH, aliNI) for assigning the respective request to the notifications (alNO) with the alarm data which are subsequently sent by the agent (AG).

2. Method according to Claim 1, in which
- the manager (MA1, MA2) sends, in the request notification (repAA), an item of correlation information (alaAH) for assigning the respective request to the notifications (alNO) with the alarm data which are subsequently sent by the agent (AG),
- the agent (AG) sends to the manager (MA1, MA2) a notification (staAA) for starting the alarm realignment, the said notification containing the item of correlation information (alaAH) for the respective request and a further item of correlation information (aliNI) for assigning to the respectively started realignment the notifications (alNO) with the alarm data which are subsequently sent by the agent (AG).

3. Method according to Claim 1 or 2, in which the agent (AG) also sends in the respective notifications (alNO) with the alarm data the further item of correlation information (aliNI) for assigning. the notifications (alNO) to the respectively started realignment.

4. Method according to one of the preceding claims, in which the agent (AG), after sending the notifications (alNO) with the alarm data, sends a respective notification (resAA) for ending the alarm realignment to the manager (MA1, MA2), the said notification containing an item of correlation information (alaAH) for the respective request.

5. Method according to one of the preceding claims, in which the agent (AG) uses one or more filter functions (EFD1, EFD2), which can each be controlled by an assignable manager (MA1, MA2), with filter criteria for the notifications produced by the agent (AG), the said notifications being routed to the manager (MA1, MA2) only if the filter criteria are satisfied.

6. Method according to one of the preceding claims, in which a plurality of request notifications (repAA) with correlation information (alaAH) which can in each case be assigned to the requests are sent by at least two managers (MA1, MA2).

7. Method according to Claim 6, in which the managers (MA1, MA2) are formed by different network elements (NMC1, NMC2) in the management network.

8. Method according to Claim 6 or 7, in which the managers (MA1, MA2) are formed by various network management centres (NMC1, NMC2), and the respective item of correlation information (alaAH) for assigning the request to the respective network management centre (NMC1, NMC2) is sent in the request notification (repAA).

9. Method according to one of Claims 1 to 5, in which a plurality of request notifications (repAA) with correlation information (alaAH) which can in each case be assigned to the requests are sent by one manager (e.g. MA1).

10. Method according to Claim 9, in which the manager (e.g. MA1) sends the request notifications (repAA) for different applications.

11. Method according to Claim 9' or 10, in which the manager (e.g. MA1) is formed by an operation and maintenance centre (OMC1) having various applications (OF1, OF2), and the respective item of correlation information (alaAH) for assigning the request to the respective application (OF1, OF2) is sent in the request notification (repAA) to a base station subsystem (BSS11).

12. Method according to Claim 9 or 10, in which the manager (MA1) is formed by a network management centre (NMC1) having various applications (NF1, NF2), and the respective item of correlation information (alaAH) for assigning the request to the respective application (NF1, NF2) is sent in the request notification (repAA) to an operation and maintenance centre (OMC1).

13. Communication system for handling alarms using a management network which has a plurality of management levels (A, B, C), the alarm data for active alarms being transmitted for parallel alarm realignments between an agent (AG) on one management level (e.g. B) and managers (MA1, MA2) on a next highest management level (e.g. A), having
- elements (M-CTR) in the manager (MA1, MA2) for sending one or more request notifications (repAA) to the agent (OMC1) for transmission of the alarm data, and
- elements (M-CTR) in the manager (MA1, MA2) for receiving correlation information (alaAH, aliNI) for assigning the respective request to the notifications (alNO) with the alarm data which are subsequently sent by the agent (AG).

14. Communication system according to Claim 13, having
- elements (M-CTR) in the manager (MA1, MA2) for sending the request notifications (repAA), which contain a respective item of correlation information (alaAH) for assigning the respective request to the notifications (alNO) with the alarm data which are subsequently sent by the agent (AG), and
- elements (A-CTR) in the agent (AG) for sending to the manager (MA1, MA2) a notification (staAA) for starting the alarm realignment, the said notification containing the item of correlation information (alaAH) for the respective request and a further item of correlation information (aliNI) for assigning to the respectively started realignment the notifications. (alNO) with the alarm data which are subsequently sent by the agent (AG).

15. Communication system according to Claim 13 or 14, having at least two managers (MA1, MA2) which are provided for sending a plurality of request notifications (repAA) with correlation information (alaAH) which can in each case be assigned to the requests.

16. Communication system according to Claim 15, having different network elements (NMC1, NMC2) in the management network which are provided in the form of managers (MA1, MA2) for sending the request notifications (repAA).

17. Communication system according to Claim 15 or 16, having various network management centres (NMC1, NMC2) in the form of managers (MA1, MA2) for sending the request notifications (repAA).

18. Communication system according to Claim 13 or 14, having a manager (e.g. MA1) which is provided for sending a plurality of request notifications (repAA) with correlation information (alaAH) which can in each case be assigned to the requests.

19. Communication system according to Claim 18, having a manager (e.g. MA1) which is provided for sending request notifications (repAA) for different applications.

20. Communication system according to Claim 18 or 19, having an operation and maintenance centre (OMC1) in the form of a physical network element having various applications (OF1, OF2), the said operation and maintenance centre (OMC1) sending the item of correlation information (alaAH) for assigning the request to the respective application (OF1, OF2) in the request notification (repAA) to a base station subsystem (BSS11).

21. Communication system according to Claim 18 or 19, having a network management centre (NMC1) in the form of a physical network element having various applications (NF1, NF2), the said network management centre (NMC1) sending the item of correlation information (alaAH) for assigning the request to the respective application (NF1, NF2) in the request notification (repAA) to an operation and maintenance centre (OMC1).

## Revendications

1. Procédé pour traiter des alertes dans un système de communication par un réseau de gestion comportant plusieurs niveaux (A, B, C) de gestion, les données d'alerte active étant transmises pour une égalisation en parallèle des données d'alerte entre un agent (AG) d'un niveau (B, C) de gestion et des gestionnaires (MA1, MA2) d'un niveau (A, B) de gestion juste supérieur, dans lequel
- il est émis par le gestionnaire (MA1, MA2) chaque fois une ou plusieurs informations (repAA) de requête pour la transmission des données d'alerte à l'agent (AG), et
- il est reçu par le gestionnaire (MA1, MA2) des informations (alaAH, aliNI) de corrélation pour une association de la requête associée aux informations (alNO) comportant les données d'alerte, émises ensuite par l'agent (AG).

2. Procédé suivant la revendication 1, dans lequel
- il est reçu par le gestionnaire (MA1, MA2), dans l'information (repAA) de requête une information (alaAH) de corrélation pour une association de la requête associée aux informations (alNO) comportant les données d'alerte, émises ensuite par l'agent (AG),
- il est émis par l'agent (AG) à destination du gestionnaire (MA1, MA2) une information (staAA) pour faire débuter l'égalisation de données d'alerte, information dans laquelle est contenue l'information (alaAH) de corrélation pour la requête associée et une information (aliNI) de corrélation supplémentaire pour une association des informations (alNO) comportant les données d'alerte, émises ensuite par l'agent (AG), à l'égalisation de données commencée.

3. Procédé suivant la revendication 1 ou 2, dans lequel il est émis conjointement par l'agent (AG) chaque fois dans les informations (aINO) comportant les données d'alerte l'information (aliNI) de corrélation supplémentaire pour l'association des informations (alNO) à l'égalisation de données commencée.

4. Procédé suivant l'une des revendications précédentes, dans lequel il est émis par l'agent (AG) à destination du gestionnaire (MA1, MA2), après l'émission des informations (alNO) comportant les données d'alerte, chaque fois une information (resAA) pour mettre fin à l'égalisation de données d'alerte, dans laquelle est contenue une information (alaAH) de corrélation pour la requête associée.

5. Procédé suivant l'une des revendications précédentes, dans lequel il est utilisé par l'agent (AG) une ou plusieurs fonctions (EFD1, EFD2) de filtre pouvant être commandées par un gestionnaire (MA1, MA2) pouvant être associé, comportant des critères de filtrage pour les informations produites par l'agent (AG) qui ne sont acheminées au gestionnaire (MA1, MA2) que lorsque les critères de filtrage sont satisfaits.

6. Procédé suivant l'une des revendications précédentes, dans lequel plusieurs informations (repAA) de requête comportant des informations (alaAH) de corrélation pouvant être associées chaque fois aux requêtes sont émises par au moins deux gestionnaires (MA1, MA2).

7. Procédé suivant la revendication 6, dans lequel les gestionnaires (MA1, MA2) sont formés par des dispositifs (NMC1, NMC2) différents du réseau de gestion.

8. Procédé suivant la revendication 6 ou 7, dans lequel les gestionnaires (MA1, MA2) sont formés par divers centres (NMC1, NMC2) de gestion du réseau, et chaque fois l'information (alaAH) de corrélation pour l'association de la requête au centre (NMC1, NMC2) de gestion du réseau associé est émise dans l'information (repAA) de requête.

9. Procédé suivant l'une des revendications 1 à 5, dans lequel plusieurs informations (repAA) de requête comportant chaque fois les informations (alaAH) de corrélation pouvant être associées aux requêtes sont émises par un gestionnaire (par exemple MA1).

10. Procédé suivant la revendication 9, dans lequel il est émis par le gestionnaire par exemple (MA1) les informations (repAA) de requête pour des applications différentes.

11. Procédé suivant la revendication 9 ou 10, dans lequel le gestionnaire (par exemple MA1) est formé par un centre (OMC1) d'exploitation et d'entretien ayant diverses applications (OF1, OF2), et l'information (alaAH) de corrélation pour l'association de la requête à l'application (OF1, OF2) étant émise dans l'information (repAA) de requête à destination d'un système (BSS11) de station de base.

12. Procédé suivant la revendication 9 ou 10, dans lequel le gestionnaire (MA1) est formé par un centre (NMC1) de gestion du réseau ayant diverses applications (NF1, NF2), et l'information (alaAH) de corrélation pour associer la requête à l'application (NF1, NF2) associée étant émise dans l'information (repAA) de requête à destination d'un centre (OMC1) d'exploitation et d'entretien.

13. Système de communication pour traiter des alertes par un réseau de gestion comportant plusieurs niveaux (A, B, C) de gestion, les données d'alerte active étant transmises pour des égalisations parallèles de données d'alerte entre un agent (AG) d'un niveau (par exemple B) de gestion et des gestionnaires (MA1, MA2) d'un niveau (par exemple A) de gestion juste supérieur, comportant
- des dispositifs (M-CTR) dans le gestionnaire (MA1, MA2) pour l'envoi d'une ou plusieurs informations (repAA) de requête pour la transmission des données d'alerte à l'agent (OMC1), et
- des dispositifs (M-CTR) dans le gestionnaire (MA1, MA2) pour la réception d'informations (alaAH, aliNI) de corrélation pour une association de la requête associée aux informations (aINO) comportant les données d'alerte, émises ensuite par l'agent (AG).

14. Système de communication suivant la revendication 13, comportant
- des dispositifs (M-CTR) dans le gestionnaire (MA1, MA2) pour l'émission des informations (repAA) de requête dans lesquelles est contenue chaque fois une information (alaAH) de corrélation pour une association de la requête associée aux informations (aINO) comportant les données d'alerte, émises ensuite par l'agent (AG), et
- comportant des dispositifs (A-CTR) dans l'agent (AG) pour l'émission à destination du gestionnaire (MA1, MA2) d'une information (staAA) pour commencer l'égalisation de données d'alerte, information dans laquelle est contenue l'information (alaAH) de corrélation pour la requête associée et une information (aliNI) de corrélation supplémentaire pour une association des informations (alNO) comportant les données d'alerte, émises ensuite par l'agent (AG), à l'égalisation de données commencée.

15. Système de communication suivant la revendication 13 ou 14, comportant au moins deux gestionnaires (MA1, MA2) qui sont prévus pour émettre plusieurs informations (repAA) de requête comportant chaque fois les informations (alaAH) de corrélation pouvant être associées aux requêtes.

16. Système de communication suivant la revendication 15, comportant des dispositifs (NMC1, NMC2) différents du réseau de gestion, qui sont prévus comme gestionnaires (MA1, MA2) pour émettre des informations (repAA) de requête.

17. Système de communication suivant la revendication 15 ou 16, comportant divers centres (NMC1, NMC2) de gestion du réseau comme gestionnaire (MA1, MA2) pour émettre les informations (repAA) de requête.

18. Système de communication suivant la revendication 13 ou 14, comportant un gestionnaire (par exemple MA1) qui est prévu pour émettre plusieurs informations (repAA) de requête comportant chaque fois des informations (alaAH) de corrélation pouvant être associées aux requêtes.

19. Système de communication suivant la revendication 18, comportant un gestionnaire (par exemple MA1) qui est prévu pour émettre des informations (repAA) de requête pour différentes applications.

20. Système de communication suivant la revendication 18 ou 19, comportant un centre (OMC1) d'exploitation et d'entretien comme dispositif physique du réseau à application (OF1, OF2) diverse, qui émet l'information (alaAH) de corrélation pour associer la requête à l'application (OF1, OF2) associée dans l'information (repAA) de requête destinée à un système (BSS11) de station de base.

21. Système de communication suivant la revendication 18 ou 19, comportant un centre (NMC1) de gestion de réseau comme dispositif physique du réseau à diverses applications (NF1, NF2), qui émet l'information (alaAH) de corrélation pour l'association de la requête à l'application (NF1, NF2) associée dans l'information (repAA) de requête à destination d'un centre (OMC1) d'exploitation et d'entretien.
